# EUROPÄISCHE PATENTANMELDUNG

(11) **EP 4 575 787 A1**
(43) Veröffentlichungstag der Anmeldung: **25.06.2025**
(21) Anmeldenummer: 24220118.4
(22) Anmeldetag: 16.12.2024
(51) Int. Cl.: G06F 9/50, G05B 23/00

(54) **STRÖMUNGSERZEUGUNGSSYSTEM UND VERFAHREN ZU DESSEN BETRIEB**

(30) Priorität: 22.12.2023 DE 102023136494
(71) Anmelder: ebm-papst Mulfingen GmbH & Co. KG, 74673 Mulfingen (DE)
(72) Erfinder: Schroth, Sebastian, 74635 Kupferzell (DE); Heini, Sébastien, 67280 Urmatt (DE)
(74) Vertreter: Rüger Abel Patentanwälte PartGmbB

(57) **Zusammenfassung**

Die Erfindung betrifft ein Strömungserzeugungssystem (10) und ein Verfahren zu dessen Betrieb. Das Strömungserzeugungssystem (10) hat mehrere Strömungserzeugungseinheiten (11), die jeweils zur Erzeugung einer individuellen Fluidströmung (F), insbesondere Luftströmung (L), eingerichtet sind. Hierzu kann die Strömungserzeugungseinheit (11) beispielsweise einen elektromotorisch betriebenen Ventilator (12) aufweisen. Eine lokale Steuerung (15) hat einen Prozessor (16), einen Arbeitsspeicher (17) und einen Prozess-Scheduler (18) und ist über eine Kommunikationsschnittstelle (19) mit einem Kommunikationsnetzwerk (20) kommunikationsverbunden. Eine Steueraufgabe (AG) kann durch eine Netzwerkgruppe (34) mit Hilfe von mehreren lokalen Steuerungen (15) der zu der Netzwerkgruppe (34) gehörenden Strömungserzeugungseinheiten (11) parallel bearbeitet werden, wenn eine einzelne lokale Steuerung (15) zur Bearbeitung der Steueraufgabe (AG) keine ausreichende Rechenleistung und/oder keine ausreichende Speicherkapazität aufweist. Dabei lassen sich auch komplexe Steueraufgaben (AG) bearbeiten, ohne dass hierfür zwingend ein mit dem Strömungserzeugungssystem (10) verbundener Internetdienst (Cloud-Service) oder Server oder eine erhöhte Rechen- und Speicherkapazität der lokalen Steuerungen (15) erforderlich wäre.

## Beschreibung

Die Erfindung betrifft ein Strömungserzeugungssystem aufweisend mehrere Strömungserzeugungseinheiten, die mittels eines Kommunikationsnetzwerks kommunikationsverbunden sind. Die Erfindung betrifft auch ein Verfahren zum Betreiben eines solchen Strömungserzeugungssystems.

Jede Strömungserzeugungseinheit ist dazu eingerichtet, eine Fluidströmung zu erzeugen. Eine Fluidströmung kann eine Flüssigkeitsströmung oder eine Gasströmung sein.

Das Strömungserzeugungssystem kann beispielsweise Bestandteil einer Lüftungsanlage, Heizungsanlage, Kühlanlage oder Klimaanlage sein.

Übliche Strömungserzeugungseinheiten verfügen lediglich über eine begrenzte Rechenleistung. Komplexere Steueraufgaben sind für die Strömungserzeugungseinheit bzw. deren Prozessor daher kaum zu bewältigen. Mit zunehmender Komplexität der Steueraufgaben steigt der Bedarf nach Rechenleistung in den Strömungserzeugungseinheiten. Dies verursacht hohe Kosten. Ein anderer Ansatz besteht darin, einen zentralen Server oder einen Internetdienst bzw. Cloud-Service bereitzustellen, der komplexe Steueraufgaben übernimmt. Hierfür ist es allerdings erforderlich, die Strömungserzeugungseinheiten mit dem zentralen Server oder Internetdienst zu vernetzen. Die Verwendung eines Internetdienstes kann aus Gründen der Datensicherheit unerwünscht sein und erfordert eine hohe Verfügbarkeit des Internetdienstes, was abhängig vom Installationsort des Strömungserzeugungssystems nicht in jedem Fall gewährleistet werden kann, beispielsweise an Orten mit einer nicht ausreichend stabilen Internetverbindung. Ein zentraler Server am Installationsort der Strömungserzeugungssystems kann zwar Datensicherheit gewährleisten und benötigt auch keine hohe Verfügbarkeit einer Internetverbindung, verursacht aber Zusatzkosten.

Es besteht daher ein Bedarf für ein Strömungserzeugungssystem, das kostengünstig bereitgestellt und betrieben werden kann.

US 11 378 938 B2 offenbart ein System und ein Verfahren zur Verbesserung der Datennutzung von einer Mehrzahl von Sensoren, die mit einer Pumpe oder einem Ventilator verbunden sind. Die Sensordaten werden einer Mustererkennung unterzogen, erfassten Sensordaten zu interpretieren. Dabei können Verfahren zum maschinellen Lernen eingesetzt werden.

Das Vernetzen von Funkteilnehmern zu einem sogenannten "Mesh-Netzwerk" ist in US 2017/0006521 A1 beschrieben.

Es ist die Aufgabe der vorliegenden Erfindung, ein Strömungserzeugungssystem zu schaffen, das einfach und kostengünstig bereitgestellt und betrieben werden kann und insbesondere das Bearbeiten von komplexen Steueraufgaben mit einfachen Mitteln ermöglicht.

Diese Aufgabe wird durch ein Strömungserzeugungssystem mit den Merkmalen des Patentanspruches 1 sowie ein Verfahren mit den Merkmalen des Patentanspruches 14 gelöst.

Das Strömungserzeugungssystem gemäß der vorliegenden Erfindung hat mehrere Strömungserzeugungseinheiten, die mittels eines Kommunikationsnetzwerks kommunikationsverbunden sind. Die Kommunikationsverbindung ist insbesondere bidirektional. Jede Strömungserzeugungseinheit hat eine Kommunikationsschnittstelle, die zur Verbindung mit dem Kommunikationsnetzwerk eingerichtet ist.

Außerdem weist jede Strömungserzeugungseinheit eine lokale Steuerung mit einem Prozessor und einem Prozess-Scheduler auf. Der Prozess-Scheduler der Strömungserzeugungseinheit kann in der Steuerung durch ein vom Prozessor ausführbares Programm durch eine separat vom Prozessor ausgeführte Recheneinrichtung realisiert sein.

Jede Strömungserzeugungseinheit ist dazu eingerichtet, eine individuelle Fluidströmung zu erzeugen. Die Fluidströmungen mehrerer oder aller Strömungserzeugungseinheiten des Strömungserzeugungssystems können jeweils in Teilströme aufgeteilt und/oder miteinander zu einer Gesamtfluidströmung kombiniert werden. Eine Fluidströmung kann eine Flüssigkeitsströmung oder eine Gasströmung sein.

Vorzugsweise kann eine Strömungserzeugungseinheit oder können mehrere der vorhandenen Strömungserzeugungseinheiten oder alle Strömungserzeugungseinheiten einen Ventilator aufweisen, der dazu eingerichtet sind, eine Luftströmung zu erzeugen. Zusätzlich oder alternativ kann eine Strömungserzeugungseinheit oder können mehrere der vorhandenen Strömungserzeugungseinheiten oder alle Strömungserzeugungseinheiten auch eine Pumpe zur Erzeugung einer Flüssigkeitsströmung aufweisen.

Es ist bevorzugt, wenn jede Strömungserzeugungseinheit einen steuerbaren Elektromotor aufweist, durch dessen Betrieb der Rotor eines Ventilators oder einer Pumpe angetrieben und dadurch die betreffende Fluidströmung erzeugt werden kann.

Mindestens zwei der Strömungserzeugungseinheiten des Strömungserzeugungssystems können zumindest temporär eine Netzwerkgruppe bilden, wenn dies zur Bearbeitung einer Steueraufgabe erforderlich ist, die von dem Prozessor einer einzigen Strömungserzeugungseinheit nicht bearbeitet werden kann. Eine solche Steueraufgabe, die die Bildung einer Netzwerkgruppe veranlasst, benötigt insbesondere eine Rechenkapazität, die ein einzelner Prozessor einer Strömungserzeugungseinheit nicht bereitstellen kann. Dies gilt insbesondere dann, wenn die Steueraufgabe zeitkritisch ist und deren Bearbeitung daher innerhalb eines vorgegebenen Zeitfensters erfolgen soll oder muss.

Innerhalb der Netzwerkgruppe wird zur Bearbeitung der Steueraufgabe wie folgt vorgegangen:

Die Steuerungen der Strömungserzeugungseinheiten der Netzwerkgruppe wählen einen der Prozess-Scheduler der Steuerungen als übergeordneten Scheduler aus. Der übergeordneter Scheduler kann auch als Master-Scheduler bezeichnet werden. Der übergeordnete Scheduler ist dazu eingerichtet, die Steueraufgabe zu gliedern und einzelne Teilaufgaben zu definieren und den Prozessoren der Strömungserzeugungseinheiten der Netzwerkgruppe zuzuordnen.

Es ist dabei vorteilhaft, wenn alle Teilaufgaben unabhängig von dem Ergebnis einer anderen Teilaufgabe bearbeitet werden können, so dass alle Teilaufgaben parallel (im Wesentlichen gleichzeitig oder zumindest mit zeitlicher Überlappung während eines Bearbeitungszeitintervalls) bearbeitet werden können. Die Bearbeitungszeitdauern der Teilaufgaben können unterschiedlich lang sein.

Zur Bearbeitung der Steueraufgabe bearbeitet ein individueller Prozessor nur die ihm zugeordnete Teilaufgabe und stellt das Ergebnis der Teilaufgabe wiederum (mittelbar über einen der anderen Prozess-Scheduler oder unmittelbar) dem übergeordneten Scheduler und/oder zumindest einen der anderen Prozess-Scheduler bereit. Dazu kann der Prozessor das Ergebnis der Teilaufgabe an den übergeordneten Scheduler und/oder zumindest einen der anderen Prozess-Scheduler übertragen oder diesen zum Abruf auffordern. Der übergeordnete Scheduler ist außerdem dazu eingerichtet, die Ergebnisse der Teilaufgaben zu kombinieren, um dadurch ein Ergebnis für die gesamte Steueraufgabe zu erhalten, das dann übertragen, ausgegeben und/oder innerhalb der Strömungserzeugungssystems verwendet werden kann.

Die Anzahl der zu der Netzwerkgruppe gehörenden Strömungserzeugungseinheiten bzw. deren Steuerungen kann abhängig vom benötigten Rechen- und Speicherbedarf durch den übergeordneten Scheduler festgelegt werden und somit abhängig von der zu bearbeitenden Steueraufgabe variieren. Nach dem Bearbeiten der Steueraufgabe kann die dazu temporär gebildete Netzwerkgruppe sozusagen wieder aufgehoben oder aufgelöst werden. Für jede Steueraufgabe kann eine aus den vorhandenen Strömungserzeugungseinheiten bzw. deren Steuerungen beliebig gruppierte Netzwerkgruppe gebildet werden, die nur existiert, bis alle Teilaufgaben und somit die Steueraufgebe bearbeitet wurde.

Es kann beispielsweise vorteilhaft sein, zu bearbeitende Daten der Steueraufgabe in einzelne Datenblöcke oder Datenpakete zu unterteilen jedes Datenpaket einer der Teilaufgaben zuzuordnen. Zusätzlich oder alternativ kann ein Gesamtprozess der Steueraufgabe in einzelne kleinere Rechenprozesse aufgeteilt und jeweils einer der Teilaufgaben zugeordnet werden.

Somit können komplexe Steueraufgaben, insbesondere auch zeitkritische Steueraufgaben durch eine Netzwerkgruppe bearbeitet werden. Die Rechenleistung jedes einzelnen Prozessors und/oder ein Arbeitsspeicher jeder Steuerung muss nicht dazu eingerichtet sein, die Steueraufgabe bearbeiten zu können. Die Verwendung eines zentralen Servers oder Internetdienstes bzw. Cloud-Service kann entfallen. Optional können Daten mit einem Internetdienst bzw. Cloud-Service ausgetauscht werden, beispielsweise zur Vorbereitung der Bearbeitung der Steueraufgabe und/oder nach der Bearbeitung der Steueraufgabe und/oder unabhängig von der Steueraufgabe. Jedenfalls ist ein solcher Internetdienst bzw. Cloud-Service nicht zwingend erforderlich und wird insbesondere für die Bearbeitung der Steueraufgabe mittels der Netzwerkgruppe nicht benötigt. Eine stabile und leistungsfähige Internetverbindung zu einem Internetdienst bzw. Cloud-Service ist nicht erforderlich. Das Strömungserzeugungssystem kann beispielsweise ein in sich geschlossenes Netzwerk bilden. Es ist daher wirtschaftlich und mit einfachen Mitteln ohne aufwendige Hardwarekomponenten realisierbar.

Jede einzelne Strömungserzeugungseinheit ist vorzugsweise dazu eingerichtet, unabhängig von den anderen Strömungserzeugungseinheiten mittels der jeweils lokalen Steuerung ihre individuelle Fluidströmung zu steuern oder zu regeln, zumindest phasenweise. Jede Steuerung kann somit eine individuelle Steuerung oder Regelung ausführen, ohne dass es hierfür dauerhaft der Zusammenarbeit mit einer weiteren Steuerung bedarf. Beispielsweise kann beim Betrieb des Strömungserzeugungssystems während zumindest 80% oder 90% der Betriebszeit jede der Strömungserzeugungseinheiten autonom arbeiten, wohingegen lediglich in maximal 20% oder maximal 10% der Fälle zur Bearbeitung von komplexen Steueraufgaben das Bilden einer Netzwerkgruppe erforderlich ist.

Als Steuerung der Strömungserzeugungseinheit wird dabei insbesondere die Motorsteuerung oder ein Motorsteuerungssystem eines Elektromotors der Strömungserzeugungseinheit verwendet, ohne dass die Motorsteuerung durch zusätzliche Rechen- und/oder Speicherkapazität erweitert werden müsste.

Es ist bevorzugt, wenn das Strömungserzeugungssystem wenigstens einen Sensor aufweist. Der wenigstens eine Sensor stellt Sensordaten für eine oder für mehrere oder für alle Strömungserzeugungseinheiten bereit. Der Sensor oder zumindest einer der vorhandenen Sensoren kann ein individueller Sensor einer der Strömungserzeugungseinheiten sein. Der wenigstens eine individuelle Sensor stellt die Sensordaten für die Steuerung einer Strömungserzeugungseinheit bereit. Die Sensordaten des wenigstens einen individuellen Sensors können durch die betreffende Steuerung optional über das Kommunikationsnetzwerk einer oder mehreren weiteren Steuerungen bereitgestellt werden.

Zusätzlich oder alternativ kann der Sensor oder zumindest einer der vorhandenen Sensoren ein Systemsensor sein. Der Systemsensor kann unabhängig von einer lokalen Steuerung einer der Strömungserzeugungseinheiten mit dem Kommunikationsnetzwerk kommunikationsverbunden sein.

Als Sensor kann irgendein Sensor oder können mehrere Sensoren in beliebiger Kombination verwendet werden, z.B.: ein Temperatursensor, ein Drucksensor, ein Strömungsgeschwindigkeitssensor zur Erfassung einer Strömungsgeschwindigkeit einer Fluidströmung, ein Strömungsratensensor zur Erfassung einer Strömungsrate (Volumenstrom und/oder Massenstrom) einer Fluidströmung, ein Feuchtigkeitssensor zur Erfassung eines Feuchtigkeitswertes, insbesondere einer Feuchtigkeit in der umgebenden Atmosphäre (z.B. Luftfeuchtigkeit), ein Sensor zur Erfassung eines Gasbestandteils (z.B. CO2, Radon, etc.)in der umgebenden Atmosphäre, insbesondere einer Luftatmosphäre, ein Schwingungssensor zur Erfassung einer Schwingung und/oder Vibration, beispielsweise eines Körpers oder in einer umgebenden Atmosphäre. Der Schwingungssensor kann beispielsweise ein Beschleunigungssensor oder ein Mikrofon sein.

Das Auswerten oder Verarbeiten der vom Sensor oder von wenigstens einem der vorhandenen Sensoren bereitgestellten Sensordaten kann zum Beispiel eine Steueraufgabe sein. Durch den übergeordneten Scheduler können die Sensordaten in Datenblöcke unterteilt und jeder Datenblock einer Teilaufgabe zugeordnet werden. Beispielsweise kann eine Teilaufgabe darin bestehen, den der Teilaufgabe zugeordneten Datenblock zu komprimieren und/oder in einen Frequenzbereich zu transformieren und/oder anderweitig zu verarbeiten. Eine Auswertung und/oder Verarbeitung der Sensordaten bzw. der Datenblöcke kann im Frequenzbereich kann Bestandteil der Teilaufgebe sein. Optional kann es zu einer Teilaufgebe gehören, die im Frequenzbereich erhaltenen Ergebnisse einer Auswertung und/oder Verarbeitung wieder vom Frequenzbereich in den Zeitbereich zu transformieren. Beispielsweise können auf diese Weise Sensordaten eines Schwingungssensors durch eine Fouriertransformation (insbesondere FFT) in den Frequenzbereich transformiert und dort optional anhand von vorgegebenen Kriterien analysiert werden.

Zusätzlich oder alternativ können die Sensordaten von mehreren Sensoren miteinander in Bezug gesetzt, korreliert, kombiniert oder verglichen werden, um zusätzliche Informationen zu gewinnen, die sich aus den Sensordaten der einzelnen Sensoren nicht gewinnen lassen. Beispielsweise können Schwingungsdaten mehrerer Schwingungssensoren überwacht werden. Anhand der Sensorpositionen im System kann dann beispielsweise erkannt werden, ob die Schwingungen durch den Betrieb des Systems verursacht werden oder ob Schwingungen außerhalb des Strömungserzeugungssystems eingeleitet werden. Die rechenintensive Überwachung kann - wie erläutert - in Teilaufgaben gegliedert und durch die Steuerungen der Netzwerkgruppe bearbeitet werden.

Die Fluidströmungen mehrerer oder aller Strömungserzeugungseinheiten des Strömungserzeugungssystems können jeweils in Teilströme aufgeteilt und/oder miteinander zu einer Gesamtfluidströmung in einem Strömungsraum kombiniert werden. Beispielsweise können die Strömungserzeugungseinheiten, die fluidisch an einen gemeinsamen Strömungsraum angeschlossen sind, zumindest temporär eine Netzwerkgruppe bilden. Der Strömungsraum kann beispielsweise der Raum eines Gebäudes sein, der belüftet, geheizt, gekühlt oder klimatisiert werden soll. Beispielsweise können die einzelnen Strömungserzeugungseinheiten durch Bildung der Netzwerkgruppe ihren individuellen Betrieb koordinieren, um ein übergeordnetes Steuerungs- oder Regelungsziel zu erreichen. Ein solches Steuerungs- oder Regelungsziel kann insbesondere durch wenigstens einen Steuerungsparameter der Steueraufgabe definiert sein. Der wenigstens eine Steuerungsparameter für den Strömungsraum kann beispielsweise eine Solltemperatur, eine Sollfeuchtigkeit der Atmosphäre, eine Sollströmungsgeschwindigkeit, ein Grenzwert für einen Gasbestandteil der Atmosphäre (z.B. maximaler Kohlendioxid- oder Radonanteil), ein Solldruck, usw. oder eine beliebige Kombination davon sein.

Bei einem Ausführungsbeispiel kann das Strömungserzeugungssystem eine Bedienschnittstelle und/oder ein Gateway aufweisen. Mittels der Bedienschnittstelle und/oder des Gateways kann beispielsweise die Steueraufgabe vorgegeben und/oder ausgewählt und/oder geändert werden. Zusätzlich oder alternativ kann ein sich aus der Bearbeitung der Steueraufgabe resultierendes Ergebnis ausgegeben oder zu einem Empfänger außerhalb des Strömungserzeugungssystems übertragen werden.

Zusätzlich zu der wenigstens einen Strömungserzeugungseinheit kann das Strömungserzeugungssystem auch andere Geräte aufweisen, die an das Kommunikationsnetzwerk angeschlossen sein können, wie beispielsweise Einrichtungen zur Beeinflussung der Strömungsrichtung und/oder der Strömungsmenge (Volumenstrom und/oder Massenstrom) einer Fluidströmung, wie z.B. Ventile, einstellbare Strömungsleiteinrichtungen (z.B. Strömungsklappen), usw.

Bei irgendeinem Ausführungsbeispiel kann die Fluidströmung zwischen zwei Strömungsräumen, beispielsweise zwischen zwei Räumen in einem Gebäude, oder zwischen einem Strömungsraum und einer Umgebung (z.B. Umgebung eines Gebäudes) erzeugt werden. Es ist hier beispielsweise möglich, einen Luftaustausch zwischen einem Kellerraum und einem zum Aufenthalt für Personen vorgesehenen und eingerichteten Raum (Aufenthaltsraum) zu veranlassen. Zur Abkühlung kann beispielsweise Luft vom Keller in den Aufenthaltsraum gefördert werden. Umgekehrt kann zum Niederschlag von Feuchtigkeit im Kellerraum warme Luft aus dem Aufenthaltsraum in den Kellerraum gefördert werden.

Mittels irgendeines Ausführungsbeispiels des Strömungserzeugungssystems können, z.B. ein oder mehrere der nachfolgend beispielhaft erläuterten Verfahren durchgeführt werden.

Beispiel 1:
Mehrere Strömungserzeugungseinheiten, insbesondere Ventilatoren, sind mit einem gemeinsamen Strömungsraum (z.B. Raum eines Gebäudes) fluidisch verbunden und verursachen dort eine Gesamtfluidströmung, die aus den individuellen Fluidströmungen der Strömungserzeugungseinheiten resultiert. Durch Bildung einer temporären Netzwerkgruppe dieser Strömungserzeugungseinheiten kann eine Koordination der individuellen Steuerungen erfolgen, z.B. zeitgesteuert in regelmäßigen Zeitintervallen oder ereignisgesteuert. Dadurch kann wenigstens ein übergeordneter Steuerungsparameter im Rahmen einer Steueraufgabe derart eingestellt werden, dass sich ein oder mehrere variable Einstellmöglichkeiten der Strömungserzeugungseinheiten nutzen lassen, um eine oder mehrere zusätzliche Randbedingungen zu erfüllen. Eine Randbedingung kann z.B. sein:
- das Steuern und/oder Regeln mehrerer Steuerungsparameter unabhängig voneinander, wie z.B. das Regeln einer Temperatur und eine Feuchtigkeit im Strömungsraum;
- das Steuern und/oder Regeln des Steuerungsparameter unter Minimierung des Verschleißes, der Leistung oder des Energieverbrauchs der Strömungserzeugungseinheiten;
- das Steuern und/oder Regeln des Steuerungsparameter unter Einhaltung einer Randbedingung, wie z.B. das Begrenzen der dabei entstehenden Gesamtfluidströmung auf eine maximale Strömungsgeschwindigkeit der Gesamtfluidströmung im Strömungsraum;
- das Steuern und/oder Regeln des Steuerungsparameter durch Auswahl einer oder mehrerer oder aller Strömungserzeugungseinheiten der Netzwerkgruppe, um ein gewünschtes Strömungsprofil der Gesamtfluidströmung im Strömungsraum zu erhalten, beispielsweise eine positions- bzw. ortsabhängige Strömung der Gesamtfluidströmung innerhalb des Strömungsraums, also sozusagen eine dreidimensionale Strömungsvektorkarte, die die Richtung und/oder die Geschwindigkeit der Gesamtfluidströmung beschreibt; dazu können die geeignet räumlich angeordneten, saug- oder druckseitig mit dem Strömungsraum fluidisch verbundenen Strömungserzeugungseinheiten ausgewählt werden.

Beispiel 2:
Die Steueraufgabe besteht in der Ermittlung einer Restlebensdauer einer der Strömungserzeugungseinheiten, was durch die Steuerung der betreffenden Strömungserzeugungseinheit aufgrund der erforderlichen Rechen- und/oder Speicherleistung nicht oder zumindest nicht ausreichend schnell durchgeführt werden kann. Diese Steueraufgabe kann aber durch die Netzwerkgruppe unter Verwendung von mehreren Steuerungen (also insbesondere Prozessoren und mehreren Arbeitsspeichern) bewältigt werden. Die ermittelte Restlebensdauer kann zur Beeinflussung des Betriebs der betreffenden Strömungserzeugungseinheit verwendet und/oder über ein Gateway übertragen und/oder mittels einer Bedienschnittstelle ausgegeben werden.

Beispiel 3:
Die Sensordaten von mehreren Sensoren werden miteinander in Bezug gesetzt, um zusätzliche Informationen zu gewinnen, womit eine einzelne Steuerung überfordert wäre. Beispielsweise können die Schwingungsdaten mehrerer in einem Gebäude verteilt angeordneter Schwingungssensoren ausgewertet werden, um festzustellen, ob eine Schwingung oder Vibration durch den störungsfreien Betrieb Strömungserzeugungssystem oder durch eine Störung an einem oder an mehreren Strömungserzeugungseinheiten oder durch einen äußeren Einfluss erzeugt wurde. Durch eine Auswertung der Schwingungen im Zeitbereich und/oder im Frequenzbereich (beispielsweise Spektralanalyse), können Ursachen für auftretende Schwingungen unterschieden und geeignete Maßnahmen eingeleitet werden.

Beispiel 4:
Allgemein kann ein Verfahren oder ein Algorithmus über die Netzwerkgruppe ausgeführt werden, für deren Durchführung eine einzelne Steuerung keine ausreichende Rechenkapazität und/oder keine ausreichende Speicherkapazität bereitstellt. Beispielsweise können Software- und/oder Firmwareaktualisierung ("Update") über eine geeignete Einrichtung (z.B. Gateway) an das Strömungserzeugungssystem übermittelt und der Aktualisierungsprozess verteilt mittels der Steuerungen der gebildeten Netzwerkgruppe durchgeführt werden.

Vorteilhafte Ausgestaltungen der Erfindung ergeben sich aus den abhängigen Ansprüchen, der Beschreibung und der Zeichnung. Nachfolgend werden bevorzugte Ausführungsbeispiele der Erfindung anhand der beigefügten Zeichnung im Einzelnen erläutert. In der Zeichnung zeigen:
Figur 1 eine schematische Darstellung eines Ausführungsbeispiels eines Strömungserzeugungssystems mit mehreren Strömungserzeugungseinheiten, die an ein Kommunikationsnetzwerk angeschlossen sind,
Figur 2 ein Blockschaltbild eines Ausführungsbeispiels eines Strömungserzeugungssystems, das die Kommunikationsverbindung der Teilnehmer mit dem Kommunikationsnetzwerk veranschaulicht,
Figur 3 ein Blockschaltbild eines Ausführungsbeispiels einer Strömungserzeugungseinheit des Strömungserzeugungssystems gemäß der Figuren 1 und 2 und
Figur 4 ein Blockdiagramm, das die Bearbeitung einer komplexen Steueraufgabe durch Strömungserzeugungseinheiten des Strömungserzeugungssystems schematisch veranschaulicht.

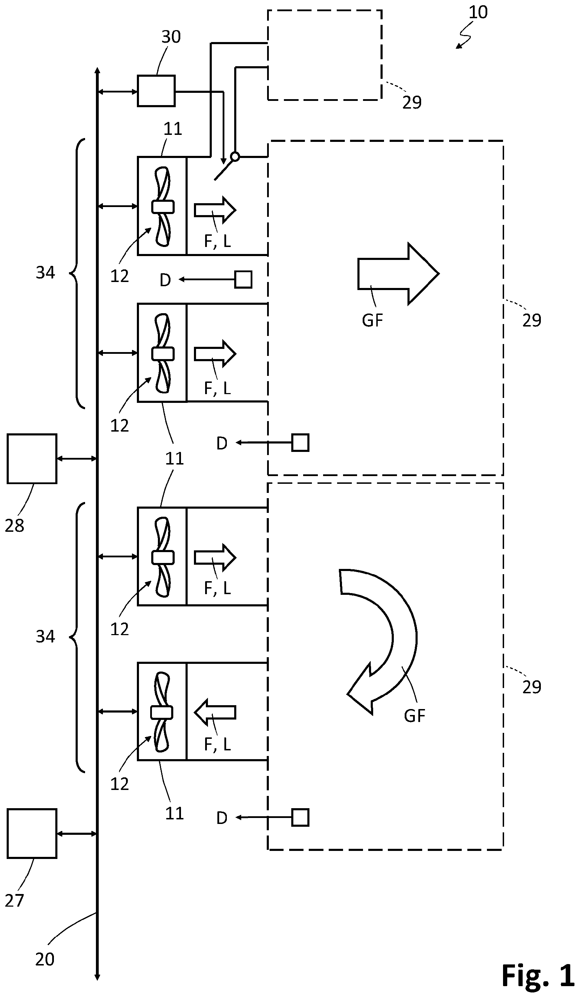

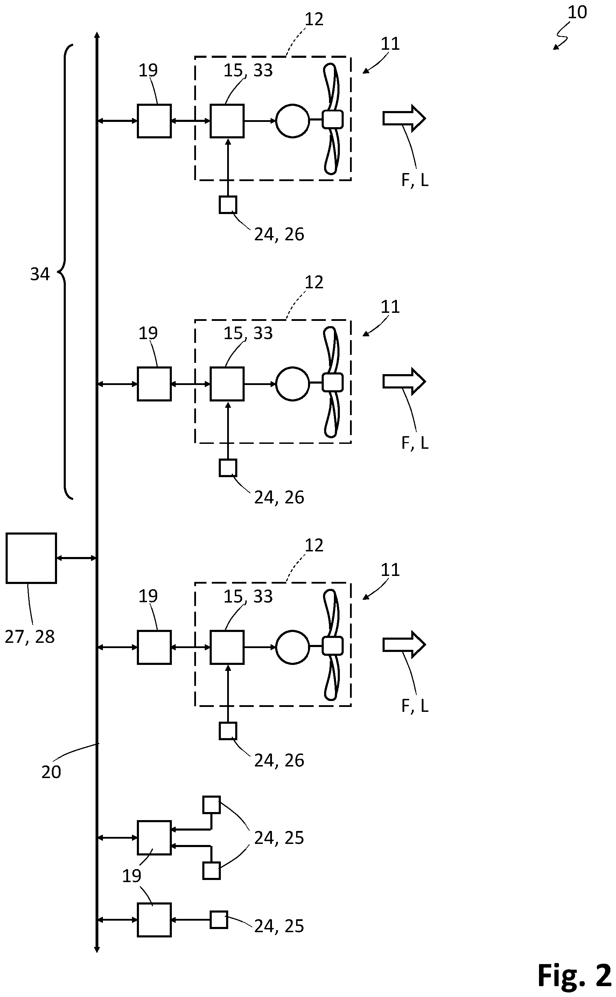

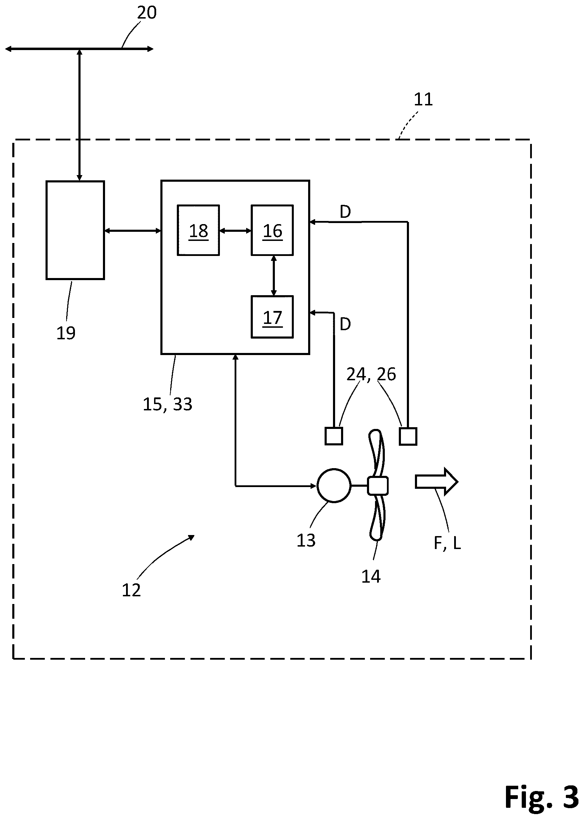

Figur 1 zeigt beispielhaft stark schematisiert ein Ausführungsbeispiel eines Strömungserzeugungssystems 10 aufweisend mehrere Strömungserzeugungseinheiten 11. Jede Strömungserzeugungseinheit 11 ist dazu eingerichtet, eine individuelle Fluidströmung F zu erzeugen. Beim Ausführungsbeispiel weist jede Strömungserzeugungseinheit 11 hierfür einen Ventilator 12 auf. Jeder Ventilator 12 kann eine Gasströmung und beispielsgemäß eine Luftströmung L als Fluidströmung F erzeugen. Der Ventilator 12 hat einen von einem Elektromotor 13 angetriebenen Ventilatorrotor, der als Lüfterrad 14 bezeichnet werden kann. Der Elektromotor 13 wird durch eine lokale Steuerung 15 der jeweiligen Strömungserzeugungseinheit 11 gesteuert, wie es in den Figuren 2 und 3 zu erkennen ist. Die lokale Steuerung 15 weist mindestens einen Prozessor 16 und mindestens einen Arbeitsspeicher 17 auf, um Rechenprozesse ausführen zu können. Die lokale Steuerung 15 verfügt außerdem über einen Prozess-Scheduler 18, um die vom Prozessor 16 auszuführenden Prozesse nach einer vorgegebenen Strategie zuzuteilen und abarbeiten zu lassen.

Die lokale Steuerung 15 jeder Strömungserzeugungseinheit 11 ist mit einer Kommunikationsschnittstelle 19 kommunikationsverbunden (Figuren 2 und 3). Über die Kommunikationsschnittstelle ist jede Strömungserzeugungseinheit 11 mit einem Kommunikationsnetzwerk 20 kommunikationsverbunden. Somit besteht die Möglichkeit, dass die mit dem Kommunikationsnetzwerk 20 verbundenen Strömungserzeugungseinheiten 11 bidirektional miteinander kommunizieren.

Wie es außerdem in den Figuren 1 bis 3 dargestellt ist, weist das Strömungserzeugungssystem 10 wenigstens einen Sensor 24 auf. Ein Sensor 24 kann dabei als Systemsensor 25 oder als individueller Sensor 26 realisiert sein. Ein individueller Sensor 26 ist einer der Strömungserzeugungseinheiten 11 zugeordnet und stellt seine Sensordaten D der jeweiligen Steuerung 15 der betreffenden Strömungserzeugungseinheit 11 bereit. Die von einem individuellen Sensor 26 bereitgestellten Sensordaten D können optional mittelbar über die Steuerung 15 und die Kommunikationsschnittstelle 19 an das Kommunikationsnetzwerk 20 und somit andere Kommunikationsteilnehmer, beispielsweise andere Strömungserzeugungseinheiten 11 übermittelt werden.

Demgegenüber ist ein Systemsensor 25 keiner individuellen Strömungserzeugungseinheit 11 zugeordnet, sondern stellt seine Sensordaten D über eine geeignete Kommunikationsschnittstelle 19 direkt dem Kommunikationsnetzwerk 20 bereit, so dass die Sensordaten D allen Kommunikationsteilnehmern und insbesondere allen Strömungserzeugungseinheiten 11 zur Verfügung stehen. Eine oder mehrere oder alle der im Strömungserzeugungssystem 10 vorhandenen Strömungserzeugungseinheiten 11 können jeweils wenigstens einen individuellen Sensor 26 aufweisen. Zusätzlich oder alternativ kann wenigstens ein Systemsensor 25 vorhanden sein. Die Anzahl und die Art der Sensoren 24 hängt von der konkreten Anwendung ab.

Wie es in den Figuren 1 und 2 außerdem dargestellt ist, kann ein Gateway 27 und/oder eine Bedienschnittstelle 28 mit dem Kommunikationsnetzwerk 20 kommunikationsverbunden sein. Über das Gateway 27 und/oder die Bedienschnittstelle 28 können automatisch oder manuell durch eine Bedienperson Daten an einen oder mehrere Kommunikationsteilnehmer des Strömungserzeugungssystems 10 übermittelt werden und/oder von einem der Kommunikationsteilnehmer des Strömungserzeugungssystems 10 empfangen werden. Beispielsweise kann mittels des Gateways 27 und/oder der Bedienschnittstelle 28 eine Steueraufgabe AG vorgegeben, ausgewählt oder modifiziert werden.

Aus Figur 1 ist zu erkennen, dass die Strömungserzeugungseinheiten 11 mit schematisch dargestellten Strömungsräume 29 fluidisch verbunden sein können. Mit jedem Strömungsraum 29 kann nur eine oder es können jeweils mehrere der Strömungserzeugungseinheiten 11 fluidisch verbunden sein. Die Strömungsräume 29 können zum Beispiel Räume eines Gebäudes sein. Jede Strömungserzeugungseinheit 11 kann saugseitig oder druckseitig an den Strömungsraum 29 angeschlossen sein und somit entweder durch Erzeugung eines Überdrucks eine Fluidströmung F in den Strömungsraum 29 hinein oder durch Erzeugung eines Unterdrucks eine Fluidströmung F aus dem Strömungsraum 29 heraus (Saugströmung) zu erzeugen. Dabei sind beliebige Kombinationen von überdruckerzeugten Fluidströmungen F und/oder unterdruckerzeugten Fluidströmungen F für jeden Strömungsraum 29 möglich. Die Darstellung in Figur 1 ist hier lediglich beispielhaft zu verstehen. Im Strömungsraum 29 wird mittels der jeweils angeschlossenen Strömungserzeugungseinheiten 11 eine Gesamtfluidströmung GF erzeugt.

Neben den Strömungserzeugungseinheiten 11 kann an das Kommunikationsnetzwerk 20 auch wenigstens ein weiterer Teilnehmer angeschlossen sein, der nicht zur Erzeugung einer Fluidströmung F eingerichtet ist, sondern beispielsweise dazu, eine erzeugte Fluidströmung F zu beeinflussen, beispielsweise die Strömungsrichtung und/oder die Strömungsrate, also beispielsweise einen Volumenstrom und/oder einen Massenstrom durch einen Strömungskanal. Eine solche Einrichtung kann ein Ventil oder allgemein eine Stelleinrichtung 30 sein, wie es stark vereinfacht in Figur 1 dargestellt ist. Mittels der in Figur 1 dargestellten Stelleinrichtung 30 kann beispielsweise ein Strömungskanal geschlossen, geöffnet und/oder der Strömungsquerschnitt für eine Fluidströmung F eingestellt werden.

Das Strömungserzeugungssystem 10 kann beispielsweise Teil einer in einem Gebäude installierten Anlage sein, wie etwa einer Lüftungsanlage, Heizungsanlage, Kühlanlage oder Klimaanlage.

Die Steueraufgabe AG kann beispielsweise wenigstens einen Steuerungsparameter für eine individuelle Fluidströmung F einer einzigen Strömungserzeugungseinheit 11 und/oder für eine durch mehrere Strömungserzeugungseinheiten 11 gemeinsam erzeugte Gesamtfluidströmung GF umfassen. Ein solcher Steuerungsparameter kann beispielsweise eine Solltemperatur, ein Solldruck, ein Grenzwert für einen Gasbestandteil in einem Strömungsraum 29 (z.B. Radonanteil der Atmosphäre), eine Sollströmungsgeschwindigkeit, ein Sollvolumenstrom oder eine beliebige Kombination hiervon oder irgendein anderer geeigneter Parameter sein.

Die lokale Steuerung 15 ist bei den hier veranschaulichten Ausführungsbeispielen durch eine Motorsteuerung 33 des jeweiligen Elektromotors 13 realisiert. Die lokale Steuerung 15 bzw. Motorsteuerung 33 stellt nur eine eingeschränkte Rechenleistung des Prozessors 16 und eine eingeschränkte Größe des Arbeitsspeichers 17 bereit. Komplexere Steueraufgaben AG, die an das Strömungserzeugungssystem 10 gestellt werden, können daher von einer der lokalen Steuerungen 15 alleine nicht oder nur unzureichend bearbeitet werden.

Zur Bearbeitung von Steueraufgaben AG können die lokalen Steuerungen 15 (hier: Motorsteuerungen 33) mehrerer Strömungserzeugungseinheiten 11 zumindest temporär eine Netzwerkgruppe 34 bilden (Figur 1). Beispielsweise können zur Lösung einer Steueraufgabe AG für einen Strömungsraum 29 die Strömungserzeugungseinheiten 11 eine Netzwerkgruppe 34 bilden, die mit dem jeweiligen Strömungsraum 29 strömungsverbunden sind. Abhängig von der Steueraufgabe können aber auch andere Zusammenstellungen von Strömungserzeugungseinheiten 11 eine Netzwerkgruppe 34 bilden, um die erforderliche Rechenleistung und/oder dem benötigten Arbeitsspeicher bereitzustellen, der für die Bearbeitung der vorgegebenen Steueraufgabe AG erforderlich ist.

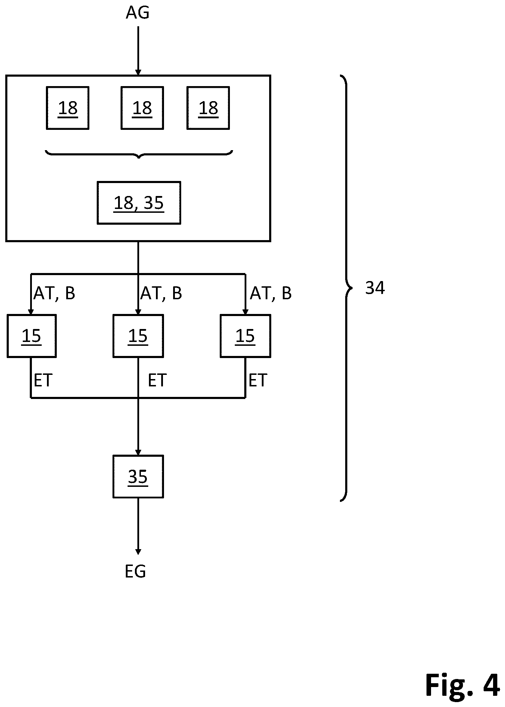

Der Ablauf der Bearbeitung einer Steueraufgabe AG durch eine Netzwerkgruppe 34 ist stark schematisiert im Blockschaltbild gemäß Figur 4 dargestellt.

Wenn eine Steueraufgabe AG von einer der Strömungserzeugungseinheiten 11 bzw. der jeweiligen Steuerung 15 empfangen wird, kann die Strömungserzeugungseinheit 11 eine oder mehrere weitere Strömungserzeugungseinheiten 11 auffordern, eine Netzwerkgruppe 34 zu bilden, um die Steueraufgabe AG bearbeiten zu können. Die beteiligten Strömungserzeugungseinheiten 11 bzw. Steuerungen 15 legen dann einen der Prozess-Scheduler 18 fest, der zumindest temporär als übergeordneter Scheduler 35 in der Netzwerkgruppe 34 für die Bearbeitung der Steueraufgabe AG verwendet wird (Figur 2). Der übergeordnete Scheduler 35 ist dazu eingerichtet, die Steueraufgabe AG in mehrere Teilaufgaben AT zu gliedern. Die erzeugten Teilaufgaben AT werden dann jeweils einer Steuerung 15 einer Strömungserzeugungseinheit 11 der Netzwerkgruppe 34 zugeordnet. Die Netzwerkgruppe 34 könnte auch als Subsystem oder Cluster bezeichnet werden.

Die vom übergeordneten Scheduler 35 definierten Teilaufgaben AT werden lokal durch jeweils eine lokale Steuerung 15 in einer Strömungserzeugungseinheit 11 bearbeitet. Am Ende dieser Bearbeitung stellt jede lokale Steuerung 15 ein Ergebnis ET der jeweiligen Teilaufgabe AT bereit. Der übergeordnete Scheduler 35 fügt die einzelnen Teilergebnisse ET der Teilaufgaben AT zusammen bzw. kombiniert diese in geeigneter Weise, um daraus das Ergebnis EG der Steueraufgabe AG zu bilden. Dieses Ergebnis EG der Steueraufgabe AG kann dann in einer oder mehreren Steuerungen 15 verwendet und/oder über das Gateway 27 oder die Bedienschnittstelle 28 ausgegeben werden.

Die anhand von Figur 4 allgemein geschilderte Vorgehensweise wird im Folgenden anhand von konkreten Beispielen erläutert.

Ein Beispiel kann eine Schwingungsanalyse im Frequenzbereich sein. Der Sensor 24 oder wenigstens einer der vorhandenen Sensoren 24 ist dabei als Schwingungssensor ausgebildet, wobei die bereitgestellten Sensordaten D Schwingungsdaten sind. Der Schwingungssensor kann ein Beschleunigungssensor oder ein Mikrofon sein. Bei diesem Sensor 24 kann es sich um einen individuellen Sensor 26 oder einen Systemsensor 25 handeln. Solche Schwingungsdaten im Frequenzbereich auszuwerten ist durch eine einzige lokale Steuerung 15 nicht oder nicht innerhalb der geforderten Zeitspanne möglich. Daher können die Schwingungsdaten in Datenblöcke B (Figur 4) unterteilt werden, und jeder Datenblock B wird einer Teilaufgabe AT zugeordnet. Die Teilaufgabe AT besteht dabei darin, den Datenblock B der Schwingungsdaten aus dem Zeitbereich in den Frequenzbereich zu transformieren, insbesondere mittels einer Fourier Transformation (z.B. Fast Fourier Transformation, FFT). Optional zusätzlich kann die Teilaufgabe AT eine Bewertung des durch den Datenblock B erhaltenen Frequenzspektrums umfassen. Beispielsweise können eine oder mehrere Frequenzspektrallinien mit Grenzwerten verglichen werden und/oder festgestellt werden, bei welchen Frequenzen im Spektrum ein Maximum oder ein Minimum auftritt. Diese Teilspektren und/oder optional deren Auswertung stellen dann jeweils ein Ergebnis ET der Teilaufgabe AT dar und werden vom übergeordneten Scheduler 35 zu einem Gesamtspektrum zusammengefügt, dass dann das Gesamtergebnis EG der Steueraufgabe AG darstellt. Auf diese Weise kann mit sehr einfachen, in der Rechen- und Speicherleistung begrenzten Steuerungen 15 auch eine komplexe Steueraufgabe AG, wie etwa die Spektralanalyse einer Schwingung durchgeführt werden.

Wenn mehrere in einem Gebäude oder in einer geografischen Position verteilt angeordnete Schwingungssensoren vorhanden sind, können die Schwingungsdaten dieser Sensoren 24 miteinander in Bezug gesetzt werden. Beispielsweise kann dadurch eine Auswertung erfolgen, ob Schwingungen oder Vibrationen durch das Strömungserzeugungssystem 10 selbst verursacht werden, oder auf äußeren Einflüssen beruhen. Durch eine Auswertung der Schwingungen im Zeitbereich und/oder im Frequenzbereich, beispielsweise durch eine Spektralanalyse wie vorstehend erläutert, können Ursachen für auftretende Schwingungen unterschieden und geeignete Maßnahmen eingeleitet werden. Beispielsweise kann erkannt werden, ob lokal eine Störung einer Strömungserzeugungseinheit 11 vorliegt, beispielsweise eine Unwucht durch ein beschädigtes Lager und/oder ein beschädigtes Lüfterrad 14 eines Ventilators 12. Bei einer solchen Auswertung bietet sich optional auch die Möglichkeit, geologische Erschütterungen (Erdbeben, Vulkanausbrüche) zu erkennen.

Als ein weiteres Beispiel für eine Steueraufgabe AG kann einer Netzwerkgruppe 34 wenigstens ein Steuerungsparameter für die in einem Strömungsraum 29 erzeugte Gesamtfluidströmung GF vorgegeben werden. Dabei können die zu der Gesamtfluidströmung GF beitragenden Strömungserzeugungseinheiten 11 unter einer oder mehreren Randbedingungen betrieben werden, beispielsweise derart, dass die benötigte Leistung bzw. Energie so gering wie möglich ist, um das mittels des wenigstens einen Steuerungsparameters definierte Steuerungs- bzw. Regelungsziel zu erreichen. Es ist zusätzlich oder alternativ möglich, mehr als einen Steuerungsparameter vorzugeben und zu steuern oder zu regeln. Jeder Steuerungsparameter für den Strömungsraum 29 kann zum Beispiel eine Solltemperatur, ein Sollluftdruck, eine Sollströmungsgeschwindigkeit, eine Sollluftfeuchtigkeit oder ein Sollwert für ein Gasbestandteil der Atmosphäre (beispielsweise CO₂-Anteil oder Radonanteil) sein. Diese Steuerungsparameter können beliebig kombiniert werden.

Wenn einer der Sensoren 24 im Strömungserzeugungssystem 10 große Datenmengen erzeugt, insbesondere in kurzer Zeit, also beispielsweise eine hohe Datenrate hat, kann eine Netzwerkgruppe 34 gebildet werden, um die Sensordaten D in Datenblöcke B zu unterteilen, wobei die Teilaufgabe AT darin bestehen kann, den jeweils der Teilaufgabe AT zugeordneten Datenblock B zu komprimieren und/oder auszuwerten und die komprimierten und/oder ausgewerteten Daten des Datenblocks B bereitzustellen (Ergebnis ET der Teilaufgebe AT). Die Kombination der komprimierten und/oder ausgewerteten Daten der Datenblöcke B bilden dann in das Ergebnis EG der Steueraufgabe AG. Eine derart ausgeführte Datenkomprimierung kann schnell durch die parallele Verarbeitung erreicht werden und die erhaltenen komprimierten Daten können als Ergebnis EG der Steueraufgabe AG mit beschränkter Bandbreite über das Kommunikationsnetzwerk 20 übertragen werden, beispielsweise auch über das Gateway 27 an ein weiteres System oder über das Internet zu einer entfernt angeordneten Zentraleinheit.

Ein anderes Beispiel für eine Steueraufgabe AG, die mit Hilfe einer Netzwerkgruppe 34 bearbeitet werden kann, ist die Ermittlung der Restlebensdauer von wenigstens einer Strömungserzeugungseinheit 11. Die hierfür erforderlichen Berechnungen kann die jeweilige Steuerung 15 auf mehrere Steuerungen 15 der Netzwerkgruppe 34 verteilen und die dann bereitgestellten Ergebnisse ET der Teilaufgaben AT wieder zusammenführen, um die Restlebensdauer abzuschätzen. Diese Restlebensdauer kann dann in der Steuerung 15 verwendet werden, beispielsweise um Steuerungsparameter zu beeinflussen. In diesem Zusammenhang ist es, z.B. möglich, die Leistung einer Strömungserzeugungseinheit 11 zu begrenzen, um deren Restlebensdauer zu verlängern bzw. nicht weiter zu verkürzen.

Generell können Verfahren, Algorithmen, Software- und/oder Firmwareaktualisierungen oder ähnliches über eine Netzwerkgruppe 34 ausgeführt werden, für deren Durchführung eine einzelne Steuerung 15 keine ausreichende Rechenkapazität und/oder keine ausreichende Speicherkapazität bereitstellt. Beispielsweise können Software- und/oder Firmwareupdates über das Gateway 27 und/oder ein Dongel oder eine andere Einrichtung übermittelt und der Update-Prozess verteilt in den Steuerungen 15 einer gebildeten Netzwerkgruppe 34 durchgeführt werden.

Die Erfindung betrifft ein Strömungserzeugungssystem 10 und ein Verfahren zu dessen Betrieb. Das Strömungserzeugungssystem 10 hat mehrere Strömungserzeugungseinheiten 11, die jeweils zur Erzeugung einer individuellen Fluidströmung F, insbesondere Luftströmung L, eingerichtet sind. Hierzu kann die Strömungserzeugungseinheit 11 beispielsweise einen elektromotorisch betriebenen Ventilator 12 aufweisen. Eine lokale Steuerung 15 hat einen Prozessor 16, einen Arbeitsspeicher 17 und einen Prozess-Scheduler 18 und ist über eine Kommunikationsschnittstelle 19 mit einem Kommunikationsnetzwerk 20 kommunikationsverbunden. Eine Steueraufgabe AG kann durch eine Netzwerkgruppe 34 mit Hilfe von mehreren lokalen Steuerungen 15 der zu der Netzwerkgruppe 34 gehörenden Strömungserzeugungseinheiten 11 parallel bearbeitet werden, wenn eine einzelne lokale Steuerung 15 zur Bearbeitung der Steueraufgabe AG keine ausreichende Rechenleistung und/oder keine ausreichende Speicherkapazität aufweist. Dabei lassen sich auch komplexe Steueraufgaben AG bearbeiten, ohne dass hierfür zwingend ein mit dem Strömungserzeugungssystem 10 verbundener Internetdienst (Cloud-Service) oder Server oder eine erhöhte Rechen- und Speicherkapazität der lokalen Steuerungen 15 erforderlich wäre.

### Bezugszeichenliste:

- 10: Strömungserzeugungssystem
- 11: Strömungserzeugungseinheit
- 12: Ventilator
- 13: Elektromotor
- 14: Lüfterrad
- 15: lokale Steuerung
- 16: Prozessor
- 17: Arbeitsspeicher
- 18: Prozess-Scheduler
- 19: Kommunikationsschnittstelle
- 20: Kommunikationsnetzwerk

- 24: Sensor
- 25: Systemsensor
- 26: individueller Sensor
- 27: Gateway
- 28: Bedienschnittstelle
- 29: Strömungsraum
- 30: Stelleinrichtung

- 33: Motorsteuerung
- 34: Netzwerkgruppe
- 35: übergeordneter Scheduler

- AG: Steueraufgabe
- AT: Teilaufgabe
- B: Datenblock
- D: Sensordaten eines Sensors
- EG: Ergebnis der Steueraufgabe
- ET: Ergebnis der Teilaufgabe
- F: Fluidströmung
- GF: Gesamtfluidströmung
- L: Luftströmung

## Patentansprüche

1. Strömungserzeugungssystem (10) aufweisend mehrere Strömungserzeugungseinheiten (11), die mittels eines Kommunikationsnetzwerks (20) kommunikationsverbunden sind,
wobei jede Strömungserzeugungseinheit (11) eine lokale Steuerung (15) mit einem Prozessor (16) und mit einem Prozess-Scheduler (18) und eine mit der Steuerung (15) kommunikationsverbundene Kommunikationsschnittstelle (19) zur Verbindung mit dem Kommunikationsnetzwerk (20) aufweist,
wobei jede Strömungserzeugungseinheit (11) dazu eingerichtet ist, mit einer oder mehreren oder allen anderen Strömungserzeugungseinheiten (11) eine Netzwerkgruppe (34) zu bilden, die dazu eingerichtet ist, eine Steuerungsaufgabe (AG) verteilt mittels der Prozessoren (16) der Strömungserzeugungseinheiten (11) der Netzwerkgruppe (34) zu bearbeiten, wobei einer der Prozess-Scheduler (18) als übergeordneter Scheduler (35) arbeitet und dazu eingerichtet ist, Teilaufgaben (AT) der Steuerungsaufgabe (AG) zu definieren, den Prozessoren (16) der Strömungserzeugungseinheiten (11) der Netzwerkgruppe (34) die Teilaufgaben (AT) zuzuteilen und die Ergebnisse (ET) der Teilaufgaben (AT) zur Bearbeitung der Steuerungsaufgabe (AG) zu kombinieren,
wobei das Strömungserzeugungssystem (10) außerdem wenigstens einen Sensor (24) aufweist, der Sensordaten (D) für eine oder mehrere Strömungserzeugungseinheiten (11) bereitstellt, und
wobei der übergeordnete Scheduler (35) dazu eingerichtet ist, die Sensordaten (D) des Sensors (24) oder von wenigstens einem der vorhandenen Sensoren (24) in Datenblöcke (B) zu unterteilen und jeden Datenblock (B) einer Teilaufgabe (AT) zuzuordnen.

2. Strömungserzeugungssystem nach Anspruch 1, wobei jede Strömungserzeugungseinheit (11) dazu eingerichtet ist, unabhängig von den anderen Strömungserzeugungseinheiten (11) mittels der lokalen Steuerung (15) das Erzeugen einer individuellen Fluidströmung (F) zu steuern oder zu regeln.

3. Strömungserzeugungssystem nach Anspruch 1 oder 2, wobei dem Kommunikationsnetzwerk (20) kein Cloud-Service zur Bearbeitung der Steuerungsaufgabe (AG) zur Verfügung steht.

4. Strömungserzeugungssystem nach einem der vorhergehenden Ansprüche, wobei der Sensor (24) oder zumindest einer der vorhandenen Sensoren (24) ein individueller Sensor (26) einer der Strömungserzeugungseinheiten (11) ist.

5. Strömungserzeugungssystem nach einem der vorhergehenden Ansprüche, wobei der Sensor (24) oder zumindest einer der vorhandenen Sensoren (24) ein Systemsensor (25) ist, der unabhängig von den Strömungserzeugungseinheiten (11) mit dem Kommunikationsnetzwerk (20) kommunikationsverbunden ist.

6. Strömungserzeugungssystem nach einem der vorhergehenden Ansprüche, wobei jede Teilaufgabe (AT) das Komprimieren und/oder Auswerten des zugeordneten Datenblocks (B) umfasst.

7. Strömungserzeugungssystem nach einem der vorhergehenden Ansprüche, wobei die Steuerungsaufgabe (AG) das Auswerten der Sensordaten (D) im Frequenzbereich umfasst.

8. Strömungserzeugungssystem nach einem der vorhergehenden Ansprüche, wobei die Steuerungsaufgabe (AG) das Bewerten von Sensordaten (D) mehrerer Sensoren (24) umfasst, um Informationen zu gewinnen, die über den Informationsgehalt der Sensordaten (D) des einzelnen Sensors (24) hinausgehen.

9. Strömungserzeugungssystem nach einem der vorhergehenden Ansprüche, wobei jede der Steuerungen (15) der Strömungserzeugungseinheiten (11) dazu eingerichtet ist, die Bildung einer Netzwerkgruppe (34) anzufordern.

10. Strömungserzeugungssystem nach einem der vorhergehenden Ansprüche, wobei die Steuerungsaufgabe (AG) einen Sollparameter vorgibt, und wobei die Strömungserzeugungseinheiten (11) der Netzwerkgruppe (24) dazu eingerichtet sind, ihre individuellen Steuerungen (15) zu koordinieren, um gemeinsam eine Gesamtfluidströmung (GF) zu erzeugen, mit dem Ziel, den Sollparameter zu erfüllen.

11. Strömungserzeugungssystem nach einem der vorhergehenden Ansprüche, wobei die Strömungserzeugungseinheiten (11) der Netzwerkgruppe (34) einem gemeinsamen Strömungsraum (39) zugeordnet sind.

12. Strömungserzeugungssystem nach einem der vorhergehenden Ansprüche, wobei die Steuerungen (15) der Strömungserzeugungseinheiten (11) Motorsteuerungen (33) eines Elektromotors (13) der jeweiligen Strömungserzeugungseinheit (11) sind.

13. Strömungserzeugungssystem nach einem der vorhergehenden Ansprüche, außerdem aufweisend eine Bedienschnittstelle (28) und/oder ein Gateway (27), die bzw. das mit dem Kommunikationsnetzwerk (20) kommunikationsverbunden ist und dazu eingerichtet ist, die Steuerungsaufgabe (AG) vorzugeben und/oder auszuwählen und/oder zu ändern.

14. Verfahren zum Betreiben eines Strömungserzeugungssystems (10) aufweisend mehrere Strömungserzeugungseinheiten (11), die mittels eines Kommunikationsnetzwerks (20) kommunikationsverbunden sind, und außerdem wenigstens einen Sensor (24), der Sensordaten (D) für eine oder mehrere Strömungserzeugungseinheiten (11) bereitstellt, wobei jede Strömungserzeugungseinheit (11) eine lokale Steuerung (15) mit einem Prozessor (16) und mit einem Prozess-Scheduler (18) und eine mit der Steuerung (15) kommunikationsverbundene Kommunikationsschnittstelle (19) zur Verbindung mit dem Kommunikationsnetzwerk (20) aufweist, wobei das Verfahren umfasst:
- Vorgeben einer Steuerungsaufgabe (AG),
- temporäres Bilden einer Netzwerkgruppe (34) aus mehreren oder allen Strömungserzeugungseinheiten (11) zur verteilten Bearbeitung der Steuerungsaufgabe (AG) mittels der Prozessoren (16) der Strömungserzeugungseinheiten (11) der Netzwerkgruppe (34),
- Festlegen eines übergeordneten Schedulers (35) aus den Prozess-Schedulern (18) der Strömungserzeugungseinheiten (11) der Netzwerkgruppe (34),
- Definieren von Teilaufgaben (AT) zur Bearbeitung der Steuerungsaufgabe (AG) mittels des übergeordneten Schedulers (35),
- Unterteilen der Sensordaten (D) des Sensors (24) oder von wenigstens einem der vorhandenen Sensoren (24) in Datenblöcke (B) und Zuordnen jedes Datenblock (B) einer Teilaufgabe (AT) mittels des übergeordneten Schedulers (35),
- Zuordnen jeder Teilaufgabe (AT) zu einem der Prozessoren (16) der Strömungserzeugungseinheiten (22) der Netzwerkgruppe (34)
- Bearbeiten jeder Teilaufgabe (AT) und Bereitstellen des Ergebnisses (ET) der Teilaufgabe (AT) für den übergeordneten Scheduler (35) mittels des jeweiligen Prozessors (16),
- Kombinieren der Ergebnisse (ET) der Teilaufgaben (AT) mittels des übergeordneten Schedulers (35).
